# EUROPEAN PATENT SPECIFICATION

(11) **EP 2 690 535 B1**
(45) Date of publication and mention of the grant of the patent: **13.06.2018**
(21) Application number: 11750203.9
(22) Date of filing: 20.04.2011
(51) Int. Cl.: G06F 3/0488

(54) **METHOD FOR ADJUSTING WEB PAGE ON TOUCH SCREEN AND DISPLAY TERMINAL**
VERFAHREN ZUR EINSTELLUNG VON WEBSEITEN AUF EINEM BERÜHRUNGSBILDSCHIRM UND ANZEIGEENDGERÄT
PROCÉDÉ DE RÉGLAGE D'UNE PAGE WEB SUR UN ÉCRAN TACTILE ET TERMINAL D'AFFICHAGE ASSOCIÉ

(43) Date of publication of application: 29.01.2014
(73) Proprietor: Huawei Device (Dongguan) Co., Ltd., Dongguan, Guangdong 523808 (CN)
(72) Inventor: XIE, Feng, Guangdong 518129 (CN)
(74) Representative: Thun, Clemens
(86) International application number: PCT/CN2011/073045
(87) International publication number: WO 2011/107050

(56) References cited:
- WO-A1-2010/032190
- CN-A- 101 414 231
- CN-A- 101 630 223
- US-A1- 2004 178 994
- US-A1- 2010 123 938
- US-A1- 2010 302 212
- US-A1- 2011 055 698

## Description

### FIELD OF THE INVENTION

The present invention relates to touch display technologies, and in particular, to a method for adjusting a web page on a touchscreen and a display terminal.

### BACKGROUND OF THE INVENTION

With the enrichment of wireless access approaches and the improvement of device performance, more and more people use various terminal devices as Internet access devices, and browse web page content with mobile phones, tablet computers, and the like.

By taking a mobile phone as an example, due to the restraints of the screen size and resolution, a corresponding zooming function is usually provided for the use of a browser on the mobile phone, and the implementation manner thereof also varies. For a multi-touchscreen, the zooming of an interface may be implemented by sliding with two fingers; whereas for a single-touchscreen, two functional buttons (physical or virtual buttons) may be provided: one for zooming in an interface and the other for zooming out an interface. Generally, a user expects to display as much as content within a limited size. However, when too much content is displayed, the sizes of links and virtual buttons in the page decrease accordingly, making them difficult for a user to tap accurately. Therefore, currently, a browser generally provides a web page with a default ratio, which may be adjusted by the user at will.

In the implementation of the present invention, it is found that the prior art at least has the following problem:

Each time a user starts a browser, all web pages in the browser are displayed at a default ratio, and if the user is not satisfied with the default ratio, the user needs to adjust the default ratio, so that the operation becomes very troublesome when the user needs to adjust the ratio of a web page before browsing the web page.

US 2011/055698 A1 describes a method and an apparatus for setting a font size in a mobile terminal having a touch screen.

### SUMMARY OF THE INVENTION

Embodiments of the present invention are to provide a method for adjusting a web page on a touchscreen and a display terminal, so as to automatically provide a user with a proper display ratio when the user opens a browser to browse a web page.

An embodiment of the present invention provides a method for adjusting a web page on a touchscreen, where the method may include:
presetting a correspondence between a touch area value and a display ratio relating to a zooming function;
after a display terminal is turned on and before a browser is started, collecting a touch area value of a user;
when the browser is started, determining, by using the correspondence, a display ratio corresponding to the collected touch area value of the user, the display ratio relating to a zooming function; and
displaying a web page in the browser according to the display ratio;
in the process of browsing the web page, if it is detected within a set duration that the number of times of a stop operation on the display terminal is greater than a preset threshold, recollecting a touch area value of the user, redetermining a display ratio by using the correspondence, and displaying the web page in the browser according to the redetermined display ratio.

An embodiment of the present invention further provides a display terminal having a touchscreen, where the display terminal includes:
a storage module, configured to store a preset correspondence between a touch area value and a display ratio relating to a zooming function;
a collection module, configured to collect a touch area value of a user after the display terminal is turned on and before a browser is started;
a determination module, configured to: when the browser is started, determine, by using the correspondence, a display ratio corresponding to the collected touch area value of the user, the display ratio relating to a zooming function; a display module, configured to display a web page in the browser according to the display ratio; and
a detection module, configured to: in the process of browsing the web page, if it is detected within a set duration that the number of times of a stop operation on the display terminal is greater than a preset threshold, invoke the collection module to recollect a touch area value of the user, invoke the determination module to redetermine a display ratio by using the correspondence, and invoke the display module to display the web page in the browser according to the redetermined display ratio.

In the method for adjusting a web page on a touchscreen and the display terminal in the embodiments of the present invention, by presetting a correspondence, a display ratio is determined by using the correspondence after a touch area value of a user is collected, thereby implementing that a user is automatically provided with a proper display ratio when the user opens a browser to browse a web page.

### BRIEF DESCRIPTION OF THE DRAWINGS

FIG. 1 is a schematic flow chart of a method for adjusting a web page on a touchscreen according to Embodiment 1 of the present invention;
FIG. 2 is a schematic flow chart of a method for adjusting a web page on a touchscreen according to Embodiment 1 of the present invention;
FIG. 3 is a schematic flow chart of a method for adjusting a web page on a touchscreen according an example that does not describe part of the claimed invention;
FIG. 4 is a schematic flow chart of a method for adjusting a web page on a touchscreen according to an example that does not describe part of the claimed invention;
FIG. 5 is a schematic flow chart of an exemplary embodiment of a method for adjusting a web page on a touchscreen according an example that does not describe part of the claimed invention;
FIG. 6 is a schematic structural diagram of a display terminal according to Embodiment 2 of the present invention;
FIG. 7 is a schematic structural diagram of a display terminal according to Embodiment 2 of the present invention; and
FIG. 8 is a schematic structural diagram of a display terminal according to an example that does not describe part of the claimed invention.

### DETAILED DESCRIPTION OF THE EMBODIMENTS

To make the foregoing objective, features, and advantages of the present invention more comprehensible, the following further describes the present invention in detail with reference to the accompanying drawings and exemplary embodiments.

### Embodiment 1

This embodiment provides a method for adjusting a web page on a touchscreen, where it is necessary to preset a correspondence between a touch area value and a display ratio.

There is a one-to-one mapping relationship between a touch area value a and a display ratio s, which, for example, may be the relationship shown in Table 1.

**Table 1**

| **Touch Area Value a (cm²)** | **Display Ratio s (%)** |
|---|---|
| 0<a≤0.5 | 100 |
| 0.5<a≤1 | 120 |
| 1<a≤1.5 | 150 |
| 1.5<a≤2 | 180 |
| a>2 | 200 |

The touch area value may be obtained through the conversion of a parameter such as a voltage of a touchscreen, and may also be reflected by the number of pixels of single-touch. For a display terminal of a different resolution, the number of pixels of single-touch corresponding to a same touch area value differs and may be adjusted according to a specific display terminal.

The correspondence may be stored in a display terminal, and may also be stored in a remote server which provides services to a display terminal. In consideration of factors such as efficiency and stability, the correspondence is preferably stored in a display terminal.

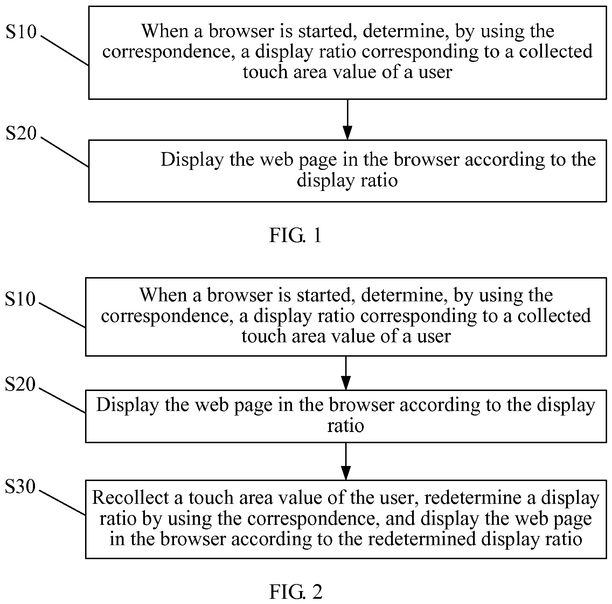

As shown in FIG. 1, the method includes the following steps:
S10: When a browser is started, determine, by using the correspondence, a display ratio corresponding to a collected touch area value of a user.

Collecting a touch area of a user may be performed after a display terminal is turned on and before a browser is started. Specifically, the following two manners may be adopted:
(1) After a display terminal is turned on and before a browser is started, area values of a first preset number of times of touches on a touchscreen are collected; the collected area values of the first preset number of times are averaged to obtain the touch area value of the user. If the number of times of practical collection is smaller than the first preset number of times, area values of the number of times of practical collection are averaged to obtain the touch area value of the user.
   Collecting a touch area value of a user is preferably performed before the browser is started, for example, in a non-browser interface (including a system unlock interface, an icon confirmation interface, and the like), because in a browser interface, most of the operations of a user are sliding, whereas in a non-browser interface, more touch operations of tapping occur, thus the collected touch area value is more accurate and also it is convenient to collect. In addition, by performing collection before a browser is started and searching for a corresponding display ratio when the browser is being started, a web page may be directly displayed at a proper display ratio when the web page is opened in the browser; by collecting the touch area value once before the browser is started, subsequently the display ratio may be used continuously to display the web page, so that the processing burden of the display terminal is relatively smaller and it is more comfortable for a user to browse.
   The first preset number of times may be a plurality of times, for example, 3 times or 15 times, and the like. An existing touchscreen (for example, a resistive touchscreen, a capacitive touchscreen, and the like) is capable of sensing a touch position and a touch area of a user. Because the touch area on a touchscreen of a user varies every time, a touch area value that is closer to a practical use state may be obtained by collecting the area values of multiple times of touches of the user and taking an average.
(2) An area value when a user touches a browser icon is collected and the area value is taken as the touch area value of the user.

This manner is more convenient. Because in existing display terminals, a browser begins to be started after a user touches a browser icon, the touch of the browser icon is performed before the browser is started. By taking the area value collected when the user touches the browser icon as the touch area value of the user and searching for a corresponding display ratio when the browser is being started, the web page may be directly displayed at a proper display ratio when the web page is opened in the browser. In this manner, the touch area value may be collected only once and serves as the basis of subsequent corresponding display ratios, and may also be recollected once when a user touches the browser icon before the browser is started each time and serves as the basis of subsequent corresponding display ratios, so as to be consistent with the browsing habit of a current user.

After the touch area value of the user is collected, a display ratio may be determined by using the correspondence when the browser is started.

S20: Display the web page in the browser according to the display ratio.

After the display ratio is determined, the display terminal displays the web page in the browser according to the display ratio.

During the process of browsing the web page, if it is detected within a preset duration (for example, 10s) that the number of times of a stop and/or a return operation on the display terminal is greater than a preset threshold (for example, 5 times), the method may further include step S30: recollect the touch area value of the user, redetermine a display ratio by using the correspondence, and redisplay the web page in the browser according to the redetermined display ratio (referring to FIG. 2). Due to that many existing terminal devices are charged by traffic, a tapping error, that is, a mismatching of a current display ratio and a display ratio demanded by a user, probably occurs when a user performs a stop operation and a return operation frequently. This situation may be caused by that a user changes the finger touching the touchscreen, or gives the display terminal to another person for browsing. Therefore, when it is detected within a preset duration that the number of times of the occurrence of inaccurate tapping events reaches a preset threshold, the display terminal may perform resampling in time, recollect the touch area value of the user, redetermine a display ratio by using the correspondence, and display the web page in the browser according to the redetermined display ratio. The resampling may be performed in the process of browsing the web page. Both the tapping for confirmation and the tapping of a link may serve as the basis for sampling.

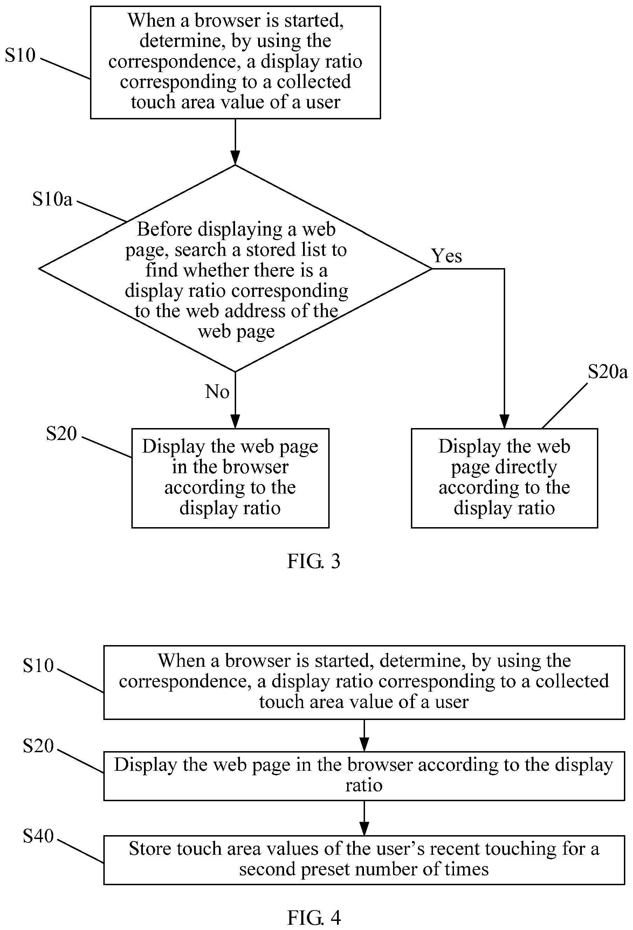

An example that does not describe part of the claimed invention (referring to FIG. 3) may also include step S10a: when it is determined to display a web page, search a stored list to find whether there is a display ratio corresponding to the web address of the web page, and if yes, perform step S20a: display the web page directly according to the display ratio, if no, perform step S20: display the web page according to the display ratio found according to the correspondence. The list is a mapping relationship table of the web address and the adopted display ratio, which may be stored locally in the display terminal or also in a remote server which provides services to the display terminal. In consideration of factors such as efficiency and stability, the list is preferably stored in the display terminal. For web pages often browsed by a user, if one display ratio is used to display all the web pages, the display ratio may differ from the most comfortable display ratio for a user to browse some web pages. By storing, in a list, the web addresses of web pages often browsed by a user and corresponding display ratios in frequent use, the comfort of a user may be improved. The display terminal may take statistics on and record the list automatically, or also a user may manually add a mapping relationship between the web address of a current web page and a current display ratio. The length of the list shall not be too long and includes web addresses, for which the number of visit times of a user is the greatest and is smaller than a preset number. Preferably, about 10 mapping relationships between web addresses and display ratios can be stored. To determine to display a web page, a user touches a browser icon to display a default home page web address of the browser, or a user touches to confirm an input web address.

Step S10a may be performed after the touch area value of the user is collected, and may also be performed at the same time the touch area value is being collected, as long as a proper display ratio can be determined just before a web page to be visited is opened. In the cases of performing step S10a and collecting the touch area value at the same time, for example, when a user touches a browser icon, the display terminal collects the touch area value of the user, and at the same time, searches the list to find whether there is a display ratio corresponding to the default home page web address of the browser; if yes, displays the default home page by using the display ratio in the list; and if no, finds a display ratio corresponding to the collected touch area value of the user by using the correspondence, and displays the default home page by using the found display ratio.

For a display terminal used by the same user for a long time, sometimes a currently acquired touch area value may differ a lot from previous touch area values due to reasons such as sweat from a finger. In order to exclude interferences caused by accidents and stabilize the collected touch area values, optionally, as shown in FIG. 4, the method may also include step S40: store touch area values of the user's recent touching for a second preset number of times. The touch area value of the user collected in step S10 is the average value of the touch area values of recent touching for the second preset number of times. The touch area value obtained according to a collection result each time may be stored. The touch area values collected before recent touching for the second preset number of times (for example, may be 10 times) may be discarded. The touch area value of the user collected in step S10 practically is an average value of stored touch area values of the second preset number of times. Step S40 may be executed before or after or between step S10 and step S20. Therefore, steps S40, S10, and S20 are not subject to a specific sequence.

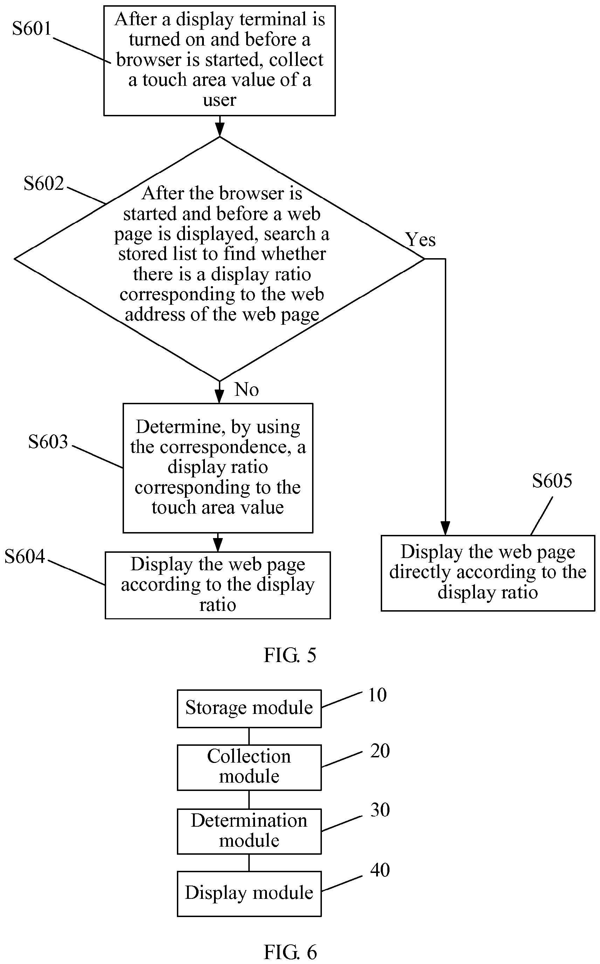

The following introduces a method for adjusting a web page on a touchscreen according to an exemplary embodiment of the present invention. In the example that does not describe part of the claimed invention, a correspondence between a touch area value and a display ratio is preset. The method in the example includes the following steps (referring to FIG. 5):
S601: After a display terminal is turned on and before a browser is started, collect a touch area value of a user.
   The aforementioned manner (1) or (2) may be adopted to collect the touch area value.
S602: After the browser is started and before a web page is displayed, search a stored list to find whether there is a display ratio corresponding to the web address of the web page; if yes, perform step S605: display the web page directly according to the display ratio; and if no, perform step S603.
S603: Determine, by using the correspondence, a display ratio corresponding to the touch area value.
S604: Display the web page according to the display ratio.

In the method for adjusting a web page on a touchscreen in the embodiment of the present invention, by presetting a correspondence, a display ratio is determined by using the correspondence after a touch area value of a user is collected, thereby implementing that when the user opens a browser to browse the web page, a proper display ratio can be automatically provided to the user. By acquiring the touch area value of the user before the browser is started, the corresponding display ratio can be found accurately and effectively when the browser is started, so that the processing burden of the display terminal is small and it is more comfortable for the user to browse. By repeatedly collecting area value of touching, it is ensured that the touch area value is closer to a practical use state. By monitoring an incorrect operation, the display ratio can be adjusted in time and a user may perform tapping and browsing more smoothly. By storing the mapping relationship table of the web addresses visited by a user the greatest number of times and the adopted display ratio, it becomes even more comfortable for a user to browse. By correcting the currently collected touch area value by using the stored historical touch area values, the interferences caused by accidents can be excluded and the collected touch area value can be stabilized.

### Embodiment 2

This embodiment provides a display terminal having a touchscreen. As shown in FIG. 6, a storage module 10, a collection module 20, a determination module 30, and a display module 40 are included.

The storage module 10 is configured to store a preset correspondence between a touch area value and a display ratio.

The collection module 20 is configured to collect a touch area value of a user.

The collection module 20 may include:
a first collection unit, configured to: after the display terminal is turned on and before a browser is started, collect area values of a first preset number of times of touches on the touchscreen; and, a first calculation unit, configured to average the collected area values of the first preset number of times to obtain the touch area value of the user, where if the number of times of practical collection of the first collection unit is smaller than the first preset number of times, the first calculation unit averages the area values of the number of times of practical collection to obtain the touch area value of the user.

The collection module 20 may further include:
a second collection unit, configured to collect an area value when the user touches a browser icon and take the area value as the touch area value of the user.

The determination module 30 is configured to: when a browser is started, determine, by using the correspondence, a display ratio corresponding to a collected touch area value of the user.

The display module 40 is configured to display a web page in the browser according to the display ratio.

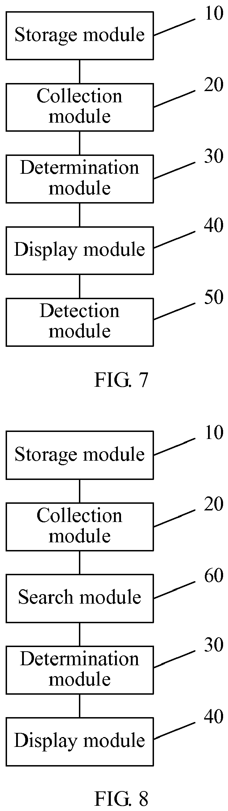

As shown in FIG. 7, the display terminal may also include a detection module 50, configured to: during the process of browsing the web page, if it is detected within a set duration that the number of times of a stop and/or a return operation on the display terminal is greater than a preset threshold, invoke the collection module 20 to recollect the touch area value of the user, invoke the determination module 30 to redetermine a display ratio by using the correspondence, and invoke the display module 40 to display the web page in the browser according to the redetermined display ratio.

As shown in FIG. 8, the display terminal may also preferably include a search module 60, configured to: when it is determined to display a web page, search a stored list to find whether there is a display ratio corresponding to the web address of the web page, and if yes, invoke the display module 40 to display the web page directly according to the display ratio. The list is a mapping relationship table of a web address and an adopted display ratio, which may be stored in the storage module 10, or may also be stored in a remote server which provides services to the display terminal.

The storage module 10 may further be configured to store touch area values of the user's recent touching for a second preset number of times. The touch area value of the user collected by the collection module 20 specifically may be an average value of the touch area values of recent touching for the second preset number of times.

Through the display terminal in the embodiment of the present invention, by presetting the correspondence, the display ratio is determined by using the correspondence after the touch area value of the user is collected, thereby implementing that when the user opens a browser to browse a web page, a proper display ratio can be automatically provided to the user. By acquiring the touch area value of the user before the browser is started, the corresponding display ratio can be found accurately and effectively when the browser is started, so that the processing burden of the display terminal is small and it is more comfortable for the user to browse. By repeatedly collecting area value of touching, it is ensured that the touch area value is closer to a practical use state. By monitoring an incorrect operation, the display ratio can be adjusted in time and a user may perform tapping and browsing more smoothly. By storing the mapping relationship table of the web addresses visited by a user the greatest number of times and the adopted display ratio, it becomes even more comfortable for a user to browse. By correcting the currently collected touch area value by using stored historical touch area values, the interferences caused by accidents can be excluded and the collected touch area value can be stabilized.

Due to that most content in Embodiment 2 are similar to those in Embodiment 1, Embodiment 2 is described in a brief manner. Please refer to Embodiment 1 for relevant content, which are not described in detail here.

Persons skilled in the art should understand that all or a part of the steps of the methods in the embodiments may be implemented by a program instructing relevant hardware. The program may be stored in a computer readable storage medium, and the storage medium may be a ROM/RAM, a magnetic disk, an optical disk.

It should be noted that the relational terms here such as first and second are used to differentiate an entity or operation from another entity or operation, and do not need or imply any actual relationship or sequence among these entities or operations. Moreover, the terms "include", "comprise", and any variation thereof are intended to cover a non-exclusive inclusion. Therefore, in the context of a process, method, object, or device that includes a series of elements, the process, method, object, or device not only includes such elements, but also includes other elements not specified expressly, or may include inherent elements of the process, method, object, or device. If no more limitations are made, an element limited by "include a/an..." does not exclude other same elements existing in the process, the method, the article, or the device which includes the element.

The foregoing descriptions are merely exemplary embodiments of the present invention, but are not intended to limit the protection scope of the present invention.

## Claims

1. A method for adjusting a web page on a touchscreen, wherein a correspondence between a touch area value and a display ratio relating to a zooming function is preset; and the method comprises:
after a display terminal is turned on and before a browser is started, collecting a touch area value of a user;
when the browser is started, determining (S10, S603), by using the correspondence, a display ratio corresponding to the collected touch area value of the user, the display ratio relating to a zooming function; and
displaying (S20) a web page in the browser according to the display ratio; **characterised in that** in the process of browsing the web page, if it is detected within a set duration that the number of times of a stop operation on the display terminal is greater than a preset threshold, recollecting (S30) a touch area value of the user, redetermining (S30) a display ratio by using the correspondence, and displaying (S30) the web page in the browser according to the redetermined display ratio.

2. The method according to claim 1, wherein collecting the touch area value of the user comprises:
after a display terminal is turned on and before the browser is started, collecting area values of a first preset number of times of touches on the touchscreen;
averaging collected area values of the first preset number of times to obtain the touch area value of the user; and
if the number of times of practical collection is smaller than the first preset number of times, averaging area values of the number of times of practical collection to obtain the touch area value of the user.

3. The method according to claim 1, wherein collecting the touch area value of the user comprises:
collecting an area value when the user touches a browser icon and taking the area value as the touch area value of the user.

4. A display terminal having a touchscreen, wherein the display terminal comprises:
a storage module (10), configured to store a preset correspondence between a touch area value and a display ratio relating to a zooming function;
a collection module (20), configured to collect a touch area value of a user after the display terminal is turned on and before a browser is started;
a determination module (30), configured to: when the browser is started, determine, by using the correspondence, a display ratio corresponding to the collected touch area value of the user, the display ratio relating to a zooming function; a display module (40), configured to display a web page in the browser according to the display ratio; and **characterised by** a detection module (50), configured to: in the process of browsing the web page, if it is detected within a set duration that the number of times of a stop operation on the display terminal is greater than a preset threshold, invoke the collection module (20) to recollect a touch area value of the user, invoke the determination module (30) to redetermine a display ratio by using the correspondence, and invoke the display module (40) to display the web page in the browser according to the redetermined display ratio.

5. The display terminal according to claim 4, wherein the collection module comprises:
a first collection unit, configured to: after the display terminal is turned on and before the browser is started, collect area values of a first preset number of times of touches on the touchscreen; and
a first calculation unit, configured to average the collected area values of the first preset number of times to obtain the touch area value of the user;
wherein if the number of times of practical collection of the first collection unit is smaller than the first preset number of times, the first calculation unit averages area values of the number of times of practical collection to obtain the touch area value of the user.

6. The display terminal according to claim 4, wherein the collection module comprises: a second collection unit, configured to collect an area value when the user touches a browser icon and take the area value as the touch area value of the user.

## Patentansprüche

1. Verfahren zum Anpassen einer Webseite auf einem berührungssensitiven Bildschirm, wobei eine Zuordnung zwischen einem Berührungsbereichswert und einem Anzeigeverhältnis, das sich auf eine Zoom-Funktion bezieht, voreingestellt ist; und wobei das Verfahren Folgendes umfasst:
nachdem ein Anzeigeendgerät eingeschaltet worden ist und bevor ein Browser gestartet wird, Erfassen eines Berührungsbereichswerts eines Anwenders;
wenn der Browser gestartet ist, Bestimmen (S10, S603) durch Verwenden der Zuordnung eines Anzeigeverhältnisses, das dem erfassen Berührungsbereichswert des Anwenders entspricht, wobei sich das Anzeigeverhältnis auf eine Zoom-Funktion bezieht; und
Anzeigen (S20) einer Webseite in dem Browser gemäß dem Anzeigeverhältnis;
**dadurch gekennzeichnet, dass**
in dem Prozess zum Browsen der Webseite, falls innerhalb einer eingestellten Dauer detektiert wird, dass die Anzahl von Stopp-Operationen auf dem Anzeigeendgerät größer ist als ein voreingestellter Schwellenwert, Neuerfassen (S30) eines Berührungsbereichswerts des Anwenders, Neubestimmen (S30) eines Anzeigeverhältnisses durch Verwenden der Zuordnung und Anzeigen (S30) der Webseite in dem Browser gemäß dem neu bestimmten Anzeigeverhältnis.

2. Verfahren nach Anspruch 1, wobei das Erfassen des Berührungsbereichswerts des Anwenders Folgendes umfasst:
nachdem ein Anzeigeendgerät eingeschaltet worden ist und bevor der Browser gestartet wird, Erfassen von Bereichswerten einer ersten voreingestellten Anzahl von Berührungen auf dem berührungssensitiven Bildschirm;
Mitteln erfasster Bereichswerte der ersten voreingestellten Anzahl, um den Berührungsbereichswert des Anwenders zu erhalten; und
falls die Anzahl praktischer Erfassung kleiner ist als die erste voreingestellte Anzahl, Mitteln von Bereichswerten der Anzahl praktischer Erfassung, um den Berührungsbereichswert des Anwenders zu erhalten.

3. Verfahren nach Anspruch 1, wobei das Erfassen des Berührungsbereichswerts des Anwenders Folgendes umfasst:
Erfassen eines Bereichswerts, wenn der Anwender ein Browser-Symbol berührt, und Verwenden des Bereichswerts als den Berührungsbereichswert des Anwenders.

4. Anzeigeendgerät, das einen berührungssensitiven Bildschirm aufweist, wobei das Anzeigeendgerät Folgendes umfasst:
ein Speichermodul (10), das konfiguriert ist, eine voreingestellte Zuordnung zwischen einem Berührungsbereichswert und einem Anzeigeverhältnis, das sich auf eine Zoom-Funktion bezieht, zu speichern.
ein Erfassungsmodul (20), das konfiguriert ist, einen Berührungsbereichswert eines Anwenders zu erfassen, nachdem das Anzeigeendgerät eingeschaltet worden ist und bevor ein Browser gestartet wird;
ein Bestimmungsmodul (30), das konfiguriert ist: dann, wenn der Browser gestartet ist, durch Verwenden der Zuordnung ein Anzeigeverhältnis zu bestimmen, das dem erfassten Berührungsbereichswert des Anwenders entspricht, wobei sich das Anzeigeverhältnis auf eine Zoom-Funktion bezieht;
ein Anzeigemodul (40), das konfiguriert ist, eine Webseite in dem Browser gemäß dem Anzeigeverhältnis anzuzeigen; und
**gekennzeichnet durch**
ein Detektionsmodul (50), das konfiguriert ist: in dem Prozess zum Browsen der Webseite, falls innerhalb einer eingestellten Dauer detektiert wird, dass die Anzahl einer Stopp-Operation auf dem Anzeigeendgerät größer ist als ein voreingestellter Schwellenwert, das Erfassungsmodul (20) aufzurufen, um einen Berührungsbereichswert des Anwenders neu zu erfassen, das Bestimmungsmodul (30) aufzurufen, um ein Anzeigeverhältnis unter Verwendung der Zuordnung neu zu bestimmen, und das Anzeigemodul (40) aufzurufen, um die Webseite in dem Browser gemäß dem neu bestimmten Anzeigeverhältnis anzuzeigen.

5. Anzeigeendgerät nach Anspruch 4, wobei das Erfassungsmodul Folgendes umfasst:
eine erste Erfassungseinheit, die konfiguriert ist: nachdem das Anzeigeendgerät eingeschaltet worden ist und bevor der Browser gestartet wird, Bereichswerte einer ersten voreingestellten Anzahl von Berührungen auf dem berührungssensitiven Bildschirm zu erfassen; und
eine erste Berechnungseinheit, die konfiguriert ist, die erfassten Bereichswerte der ersten voreingestellten Anzahl zu mitteln, um den Berührungsbereichswert des Anwenders zu erhalten;
wobei dann, wenn die Anzahl praktischer Erfassung der ersten Erfassungseinheit kleiner ist als die erste voreingestellte Anzahl, die erste Berechnungseinheit Bereichswerte der Anzahl praktischer Erfassung mittelt, um den Berührungsbereichswert des Anwenders zu erhalten.

6. Anzeigeendgerät nach Anspruch 4, wobei das Erfassungsmodul Folgendes umfasst:
eine zweite Erfassungseinheit, die konfiguriert ist, einen Bereichswert zu erfassen, wenn der Anwender ein Browser-Symbol berührt, und den Bereichswert als den Berührungsbereichswert des Anwenders zu verwenden.

## Revendications

1. Procédé de réglage d'une page Web sur un écran tactile, dans lequel une correspondance entre une valeur de zone tactile et un rapport d'affichage relatif à une fonction d'agrandissement est prédéfinie ; et
le procédé comprenant :
après qu'un terminal d'affichage est allumé et avant qu'un navigateur soit lancé, la collecte d'une valeur de zone tactile d'un utilisateur ;
au lancement du navigateur, la détermination (S10, S603), à l'aide de la correspondance, d'un rapport d'affichage correspondant à la valeur de zone tactile de l'utilisateur collectée, le rapport d'affichage se rapportant à une fonction d'agrandissement ; et
l'affichage (S20) d'une page Web dans le navigateur conformément au rapport d'affichage ;
**caractérisé en ce que**
dans le processus de navigation sur la page Web, s'il est détecté dans une durée définie que le nombre d'exécutions d'une opération d'arrêt sur le terminal d'affichage est supérieur à un seuil prédéfini, la collecte à nouveau (S30) d'une valeur de zone tactile de l'utilisateur, la détermination a nouveau (S30) d'un rapport d'affichage à l'aide de la correspondance, et l'affichage (S30) de la page Web dans le navigateur conformément au rapport d'affichage déterminé à nouveau.

2. Procédé selon la revendication 1, dans lequel la collecte de la valeur de zone tactile de l'utilisateur comprend :
après qu'un terminal d'affichage est allumé et avant que le navigateur soit lancé, la collecte de valeurs de zones d'un premier nombre prédéfini de touchers sur l'écran tactile ;
le moyennage des valeurs de zones collectées du premier nombre défini pour obtenir la valeur de zone tactile de l'utilisateur ; et
si le nombre de collectes pratiques est inférieur au premier nombre prédéfini, le moyennage des valeurs de zones du nombre de collectes pratiques pour obtenir la valeur de zone tactile de l'utilisateur.

3. Procédé selon la revendication 1, dans lequel la collecte de la valeur de zone tactile de l'utilisateur comprend :
la collecte d'une valeur de zone quand l'utilisateur touche une icône de navigateur et l'utilisation de la valeur de zone comme étant la valeur de zone tactile de l'utilisateur.

4. Terminal d'affichage comportant un écran tactile, le terminal d'affichage comprenant :
un module de mémorisation (10), configuré pour mémoriser une correspondance entre une valeur de zone tactile et un rapport d'affichage relatif à une fonction d'agrandissement ;
un module de collecte (20), configuré pour collecter une valeur de zone tactile d'un utilisateur après que le terminal d'affichage est allumé et avant qu'un navigateur soit lancé ;
un module de détermination (30), configuré pour : quand le navigateur est lancé, déterminer, à l'aide de la correspondance, un rapport d'affichage correspondant à la valeur de zone tactile de l'utilisateur collectée, le rapport d'affichage se rapportant à une fonction d'agrandissement ;
un module d'affichage (40), configuré pour afficher une page Web dans le navigateur conformément au rapport d'affichage ; et
**caractérisé par**
un module de détection (50), configuré pour : dans le processus de navigation sur la page Web, s'il est détecté dans une durée définie que le nombre d'exécutions d'une opération d'arrêt sur le terminal d'affichage est supérieur à un seuil prédéfini, amener le module de collecte (20) à collecter à nouveau une valeur de zone tactile de l'utilisateur, amener le module de détermination (30) à déterminer a nouveau un rapport d'affichage à l'aide de la correspondance, et amener le module d'affichage (40) à afficher la page Web dans le navigateur conformément au rapport d'affichage déterminé à nouveau.

5. Terminal d'affichage selon la revendication 4, dans lequel le module de collecte comprend :
une première unité de collecte, configurée pour : après que le terminal d'affichage est allumé et avant que le navigateur soit lancé, collecter des valeurs de zone d'un premier nombre prédéfini de touchers sur l'écran tactile ; et
une première unité de calcul, configurée pour moyenner les valeurs de zones collectées du premier nombre défini pour obtenir la valeur de zone tactile de l'utilisateur ;
dans lequel si le nombre de collectes pratiques de la première unité de collecte est inférieur au premier nombre prédéfini, la première unité de calcul effectue un moyennage des valeurs de zone du nombre de collectes pratiques pour obtenir la valeur de zone tactile de l'utilisateur.

6. Terminal d'affichage selon la revendication 4, dans lequel le module de collecte comprend :
une seconde unité de collecte, configurée pour collecter une valeur de zone quand l'utilisateur touche une icône de navigateur et utiliser la valeur de zone comme étant la valeur de zone tactile de l'utilisateur.
